# FASCICULE DE BREVET EUROPEEN

(11) **EP 3 353 038 B1**
(45) Date de publication et mention de la délivrance du brevet: **11.12.2019**
(21) Numéro de dépôt: 16777598.0
(22) Date de dépôt: 23.09.2016
(51) Int. Cl.: B62B 5/06, B62B 7/08

(54) **POIGNÉE PLIANTE DE POUSSETTE POUR ENFANT**
KLAPPGRIFF FÜR EINEN KINDERWAGEN
FOLDING HANDLE FOR A CHILD'S PUSHCHAIR

(30) Priorité: 23.09.2015 FR 1558957
(43) Date de publication de la demande: 01.08.2018
(73) Titulaire: Dorel France, 49309 Cholet Cedex (FR)
(72) Inventeur: BONDU, Gilles, 49100 Angers (FR); BRIAND, Yannis, 35000 Rennes (FR); WU, Tse-Chien, Kaohsiung City 800 (TW); CHENG, Hsin-Fu, Chiayi City 600 (TW)
(74) Mandataire: Vidon Brevets & Stratégie
(86) Numéro de dépôt international: PCT/EP2016/072682
(87) Numéro de publication internationale: WO 2017/050964

(56) Documents cités:
- FR-A1- 2 989 661
- GB-A- 2 426 743
- US-A1- 2006 267 303

## Description

### 1. Domaine de l'invention

Le domaine de l'invention est celui de la puériculture. Plus précisément, l'invention concerne les poussettes, ou voitures d'enfant, et en particulier le pliage de telles poussettes.

Plus précisément encore, l'invention concerne les mécanismes de pliage et de réglage de la poignée de telles poussettes.

### 2. L'art antérieur

Les poussettes, ou voitures d'enfant comprennent généralement un châssis pliable, et peuvent donc prendre au moins une position dépliée, dans laquelle la poussette peut recevoir un enfant, et au moins une position pliée pour permettre un rangement de la poussette avec un encombrement réduit.

Ces châssis sont généralement équipés d'une poignée ou d'un guidon permettant à l'utilisateur de diriger la poussette. Le document FR2989661A1 décrit une poussette a plusieurs positions de transport.

De façon générale, on cherche notamment à concilier au moins certains des objectifs suivants :
- efficacité du pliage de la poignée, l'encombrement de la poussette pliée devant être le plus réduit possible, de façon à faciliter son rangement, et son transport, par exemple dans un véhicule automobile ;
- simplicité des manipulations de pliage et dépliage de la poignée, l'utilisateur devant pouvoir effectuer ces opérations avec un nombre réduit d'opérations, et chacune de ces opérations devant être le plus facile possible ;
- simplicité de réglage de la position/hauteur de la poignée ;
- simplicité et faible coût de la fabrication.

On connaît dans l'état de la technique de nombreuses approches permettant de remplir certains de ces objectifs. D'une façon générale, les poignées sont prévues, pour être pliables, et être réglables par l'utilisateur.

Toutefois, ces poignées nécessitent une action spécifique de l'utilisateur pour pouvoir les plier.

Un autre inconvénient de ces poignées est qu'elles nécessitent, à chaque fois que le châssis est déplié, de régler de nouveau la position de la poignée selon les préférences de l'utilisateur.

Il existe, par conséquent, un besoin d'amélioration des poignées d'une telle poussette.

### 3. Objectifs de l'invention

L'invention a notamment pour objectif de pallier ces inconvénients de l'art antérieur.

Plus précisément, un objectif de l'invention est, selon au moins un mode de réalisation, de fournir une poignée de poussette dont le pliage est simplifié, rapide et ergonomique.

Ainsi, un objectif de l'invention est de fournir, selon au moins un mode de réalisation, une poignée de poussette qui offre une bonne compacité en position pliée, permettant notamment un transport et un rangement aisés de la poussette.

L'invention a également pour objectif, selon au moins un mode de réalisation, de fournir une poignée de poussette dont les manipulations de réglage lors du dépliage sont minimisées.

Encore un autre objectif de l'invention est, selon au moins un mode de réalisation, de fournir un mécanisme de pliage de la poignée qui soit simple à mettre en œuvre et robuste.

### 4. Caractéristiques essentielles de l'invention

Ces objectifs, ainsi que d'autres qui apparaîtront plus clairement par la suite, sont atteints à l'aide d'un châssis pliant de poussette pour enfant, comprenant une partie inférieure portant la ou les roues avant et les roues arrière et une partie supérieure présentant des moyens de réception d'une assise et un guidon, le châssis étant mobile entre au moins une position dépliée et au moins une position pliée, ledit guidon étant mobile entre au moins une position de poussage et une position de repli.

Selon l'invention, le châssis comprend des moyens de contrôle du pliage dudit guidon, assurant un passage dudit guidon de ladite au moins une position de poussage vers ladite position de repli, lesdits moyens de contrôle étant pilotés par le passage d'une desdites positions dépliées dudit châssis vers une desdites positions pliées.

Selon un aspect particulier de l'invention, le passage dans ladite position de repli s'effectue sous l'effet de la gravité, lorsque lesdits moyens de contrôle libèrent un élément d'engagement mobile entre une position verrouillée et au moins une position déverrouillée.

Selon une variante, le passage dans ladite position de repli peut être assisté ou assuré par des premiers moyens de rappel, par exemple un ressort de torsion.

Selon un aspect particulier de l'invention, les moyens de contrôle du pliage dudit guidon comprennent un élément de verrouillage coopérant avec un élément d'engagement mobile entre une position verrouillée et au moins une position déverrouillée, le passage de la position verrouillée vers une desdites positions déverrouillée étant piloté par le passage d'une desdites positions dépliées dudit châssis vers une desdites positions pliées.

Selon un aspect particulier de l'invention, le déverrouillage de l'élément d'engagement permet le passage dudit guidon de l'une desdites positions de poussage vers ladite position de repli par gravité.

Selon un aspect particulier de l'invention, le passage de l'élément d'engagement de la position déverrouillée vers la position verrouillée est assuré via des deuxièmes moyens de rappel.

Selon un aspect particulier de l'invention, le châssis comprend en outre des moyens de réglage de la position de poussage dudit guidon aptes à déplacer ledit guidon entre une première position desdites positions de poussage vers une deuxième position desdites positions de poussage.

Selon un aspect particulier de l'invention, ledit élément de verrouillage coopère avec un élément de réglage desdits moyens de réglage de la position de poussage dudit guidon, ledit élément de réglage étant mobile entre une position permettant le réglage par l'utilisateur, dite position de réglage, et au moins une position maintenant la position réglée par l'utilisateur, dite position réglée.

Selon un aspect particulier de l'invention, le passage de l'élément de réglage d'une desdites positions réglée vers la position de réglage est commandé par un bouton poussoir.

Selon un aspect particulier de l'invention, le passage de l'élément de réglage de la position de réglage vers une desdites positions réglée est commandé par un premier ressort de rappel lorsque ledit bouton poussoir n'est plus actionné.

Selon un aspect particulier de l'invention, la position réglée de l'élément de réglage est maintenue lors du passage du guidon entre une desdites positions de poussage vers la position de repli, et aussi lors du passage du guidon entre ladite position de repli vers une desdites positions de poussage.

L'invention concerne également une poussette, comprenant un châssis tel que décrit ci-dessus.

### 5. Liste des figures

D'autres caractéristiques et avantages de l'invention apparaîtront plus clairement à la lecture de la description suivante d'un mode de réalisation préférentiel de l'invention, donné à titre de simple exemple illustratif et non limitatif, et des dessins annexés, parmi lesquels :
- la figure 1 illustre, en perspective, un châssis de poussette selon un mode de réalisation de l'invention, en position dépliée ;
- la figure 2A est une vue en coupe détaillée représentant les moyens de verrouillage du châssis de poussette de la figure 1 ;
- la figure 2B est une vue schématique arrière de la poussette montrant une partie des moyens de verrouillage du châssis de poussette de la figure 1 ;
- les figures 3A à 3C sont des vues de côté de la poussette de la figure 1 au cours de son pliage/dépliage ;
- la figure 4 est une vue éclatée du mécanisme de pliage/dépliage de la poignée de la poussette de la figure 1;
- la figure 5 est une vue en coupe montrant le mécanisme de pliage/dépliage de la poignée de la poussette de la figure 1 ;
- les figures 6A à 6C sont des vues de détail d'une partie des éléments constituant le mécanisme de pliage de la poignée de la poussette de la figure 1;
- les figures 7A et 7B sont des vues de côté illustrant partiellement la poussette de la figure 1 au cours de son pliage ;
- les figures 8A et 8B sont respectivement une vue en coupe et une vue en coupe partielle du mécanisme de pliage de la poignée de la poussette de la figure 1 en position verrouillée ;
- les figures 9A et 9B sont respectivement une vue en coupe et une vue partielle du mécanisme de pliage de la poignée de la poussette de la figure 1 en position déverrouillée ; et
- les figures 10A à 10C sont des vues de côté du mécanisme de pliage de la poignée de la poussette de la figure 1 représentant chacune un exemple de pliage/dépliage de la poignée avec mémoire de la position initiale.

### 6. Description détaillée d'un mode de réalisation de l'invention

L'invention concerne donc un nouveau mécanisme de pliage de la poignée d'une poussette. Cette poignée peut notamment être mise en œuvre sur un châssis de poussette à trois roues ou blocs de roues.

L'invention concerne également, bien sûr, les poussettes mettant en œuvre un tel châssis, et équipées d'un dispositif de transport d'enfant, tel qu'un hamac, amovible ou non.

Pour faciliter la compréhension de l'invention, on décrit ci-après le châssis de poussette nu. L'homme du métier saura aisément équiper de façon classique un tel châssis d'un hamac, d'une nacelle ou d'une coque, ou un élément similaire, qu'il soit amovible (par exemple à l'aide d'éléments de liaison connus sous la marque « *Moduloclip* » développés par la Demanderesse), ou fixe, rigide ou souple, réglable au niveau du dossier et/ou de l'assise,...

### 6.1 Principe général

Pour répondre aux problèmes de l'art antérieur mentionnés ci-dessus, et notamment à celui du pliage simple de la poignée, l'invention propose un mécanisme de pliage dont le principe se base sur la libération contrôlée de la poignée permettant un pliage automatique par gravité de la poignée, lors de la phase de pliage de la poussette.

En outre, le mécanisme de pliage est configuré pour mémoriser la position de la poignée en position dépliée, c'est-à-dire son angle d'inclinaison par rapport aux montants du châssis avant pliage. En d'autres termes, le mécanisme de pliage/dépliage permet à la poignée de reprendre la position qui était la sienne avant le pliage de la poussette.

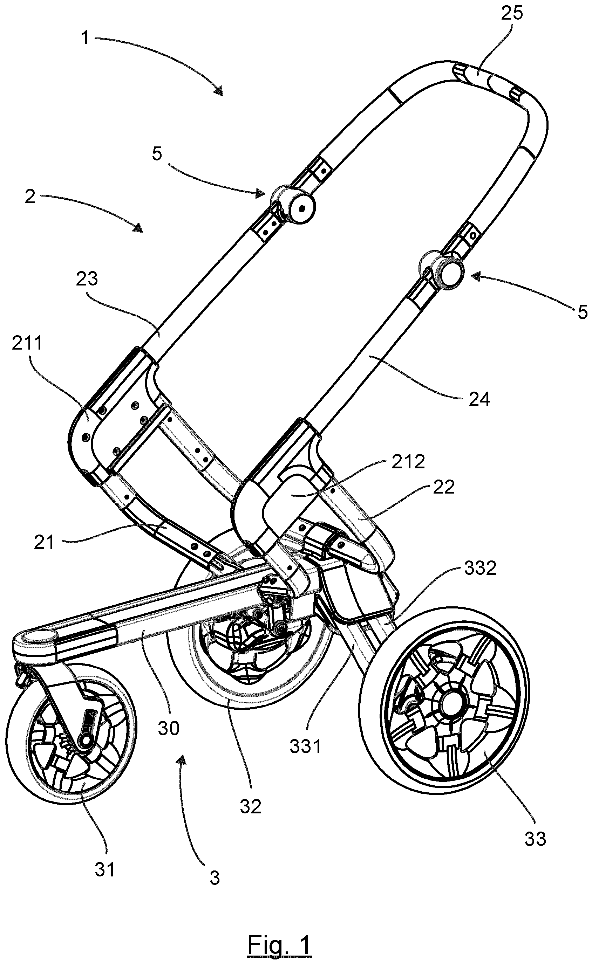

Un mode de réalisation décrit à titre d'exemple, et illustré par les figures 1 à 10C, concerne un tel mécanisme mis en œuvre sur un châssis pliant de voiture d'enfant à trois roues sur lequel peut être monté un hamac notamment (qui, pour des raisons de clarté, n'est pas illustré).

### 6.2 Exemple de châssis de poussette

La figure 1 présente un exemple de châssis 1 pliant d'une poussette qui, de façon générale, comprend une portion, ou partie supérieure, 2 et une portion, ou partie inférieure 3 présentant une poutre centrale 30. La poutre centrale 30 présente, sur sa partie avant, un bloc de roue avant 31, et sur sa partie arrière, deux blocs de roues arrière 32, 33 situés de part et d'autre de la poutre centrale 30.

Les blocs de roues arrière 32, 33 sont chacun reliés à la poutre centrale 30 par l'intermédiaire de deux bras parallèles 321, 322 (non visibles) et 331, 332 respectivement.

Plus précisément, les deux blocs de roues arrières 32 et 33 sont reliés à la poutre centrale 30 à l'aide d'articulations (non visibles sur les figures) qui permettent le pivotement des bras 321, 322, 331, 332 en direction de la poutre centrale 30 et du bloc de roue avant 31 lorsque la poussette est pliée, et inversement lors du dépliage.

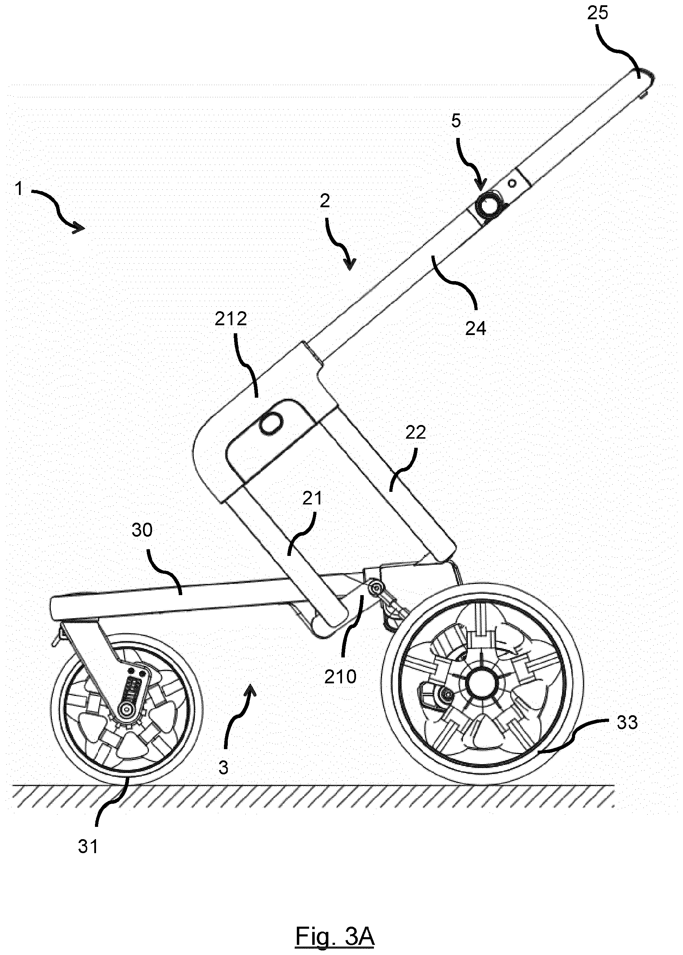

La portion supérieure 2 du châssis 1 comprend ici un arceau avant 21 et un arceau arrière 22 reliés chacun, de manière articulée, à la poutre centrale 30. Plus précisément, l'arceau avant 21 est également relié à un bras 321, 331 de chacun des blocs de roues arrière 32, 33 par l'intermédiaire d'un système de transmission 210 (visible sur la figure 3A notamment) permettant d'entrainer la rotation des bras 321, 322, 331, 332 vers la poutre centrale 30 et le bloc de roue avant 31, lors du pliage.

Les arceaux 21, 22 sont parallèles entre eux dans la position dépliée de la poussette de la figure 1. Les arceaux 21 et 22 sont en outre reliés de manière articulée, par le biais d'un élément de liaison, ou embase, 211, 212 à l'extrémité inférieure d'un poussoir constitué d'un montant droit 23 et d'un montant gauche 24. Ces montants 23, 24 sont reliées à leur extrémité supérieure par une barre de poussée, ou poignée, 25.

### 6.3 Verrouillage du châssis en position dépliée

Le châssis 1 comprend, en outre, des moyens de verrouillage 4 du châssis 1 dans sa position dépliée. Les moyens de verrouillage 4 du châssis 1 sont prévus pour éviter le pliage intempestif du châssis 1 de la poussette. Ils peuvent être conçus pour que le verrouillage soit automatique, en fin de dépliage.

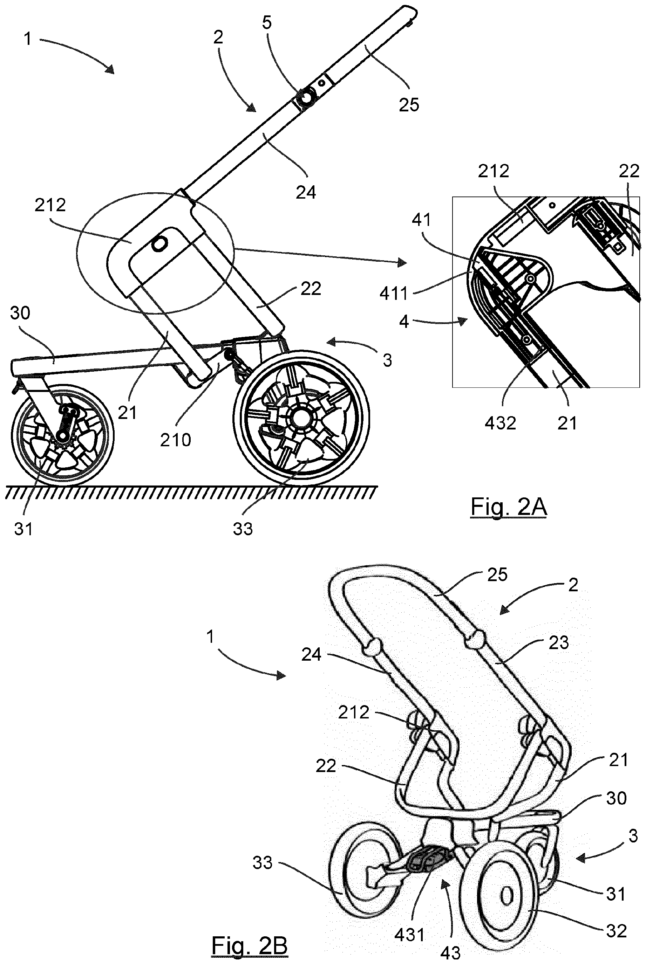

Dans le mode de réalisation illustré sur les figures 2A et 2B, un premier élément de verrouillage 41 est situé dans chacune des embases 211, 212 et verrouille l'articulation reliant l'arceau avant 21 aux embases (et donc aux montants 23, 24), empêchant ainsi le mouvement de l'arceau avant 21, et donc de l'ensemble du châssis 1.

Un deuxième élément de verrouillage 42 (non représenté) peut être monté mobile, en complément du premier élément de verrouillage 41, dans la poutre centrale 30 et verrouille le pivotement de l'arceau arrière 22 par rapport à la poutre, empêchant aussi le mouvement de l'ensemble du châssis 1.

Le système de verrouillage 4 du châssis 1 comprend des moyens de commande 43 du déverrouillage sous la forme, par exemple, d'une pédale 431 (visible sur la figure 2B), située sur le dessous de la poutre centrale 30 et agissant sur chacun des éléments de verrouillage 41 et 42 par le biais d'un élément de liaison, ou fil métallique, 432.

En position dépliée du châssis 1, le premier élément de verrouillage 41 coopère avec un rebord, ou paroi, 411 ménagé dans l'embase 212, et empêche ainsi le mouvement de l'arceau avant 21.

Lorsque la pédale 431 est actionnée, l'élément de liaison 432 tire, ou déplace, le premier élément de verrouillage 41 jusqu'à ce que ce dernier ne soit plus en contact avec le rebord 411. Le déplacement de l'élément de verrouillage 41 autorise alors le mouvement de l'arceau avant 21 par rapport à l'embase 212.

De la même façon, lorsque la pédale 431 est actionnée, le deuxième élément de verrouillage 42, situé dans la poutre centrale 30, est déplacé et libère alors le mouvement de l'arceau arrière 22.

Le déverrouillage des éléments 41 et 42 par la pédale 431 permet ainsi le pliage du châssis 1 de poussette.

### 6.4 Cinématique de pliage du châssis de poussette

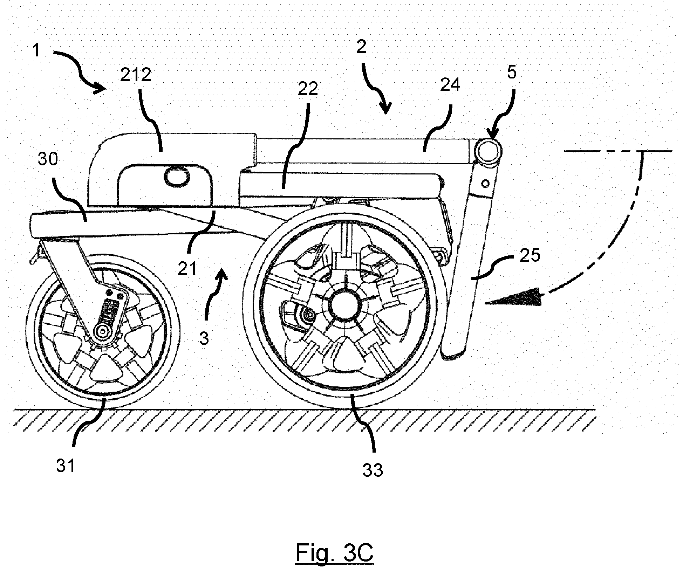

Les figures 3A à 3C illustrent différentes étapes du pliage de la poussette qui s'effectue en une seule manœuvre, la poussette étant dans une configuration dépliée sur la figure 3A et dans une configuration pliée sur la figure 3C.

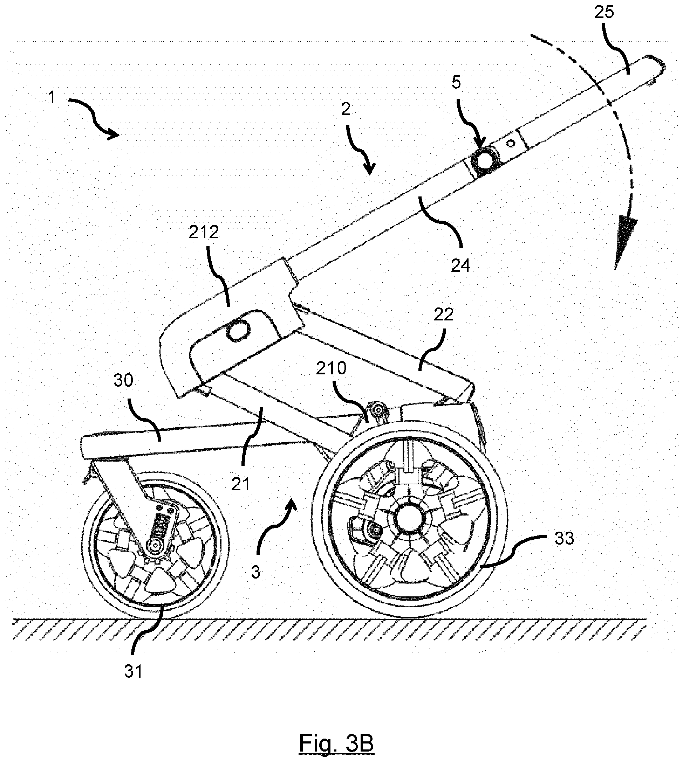

La cinématique de pliage du châssis 1, se décompose essentiellement de la manière suivante :
- les moyens de verrouillage 41, 42 sont déverrouillés à l'aide de la pédale 431 de manière à libérer notamment le mouvement de l'articulation entre l'arceau avant 21 et les montants 23, 24 et le mouvement de l'articulation entre l'arceau arrière 22 et la poutre centrale 30 ;
- l'amorce du pliage, c'est-à-dire le passage de la configuration illustrée sur la figure 3A (poussette totalement dépliée) à celle illustrée sur la figure 3B (pliage amorcé), est obtenu en pivotant manuellement les montants 23, 24 vers le bas, autour des articulations des embases 211, 212 ;
- les embases 211, 212 pivotent vers le bas et l'avant de la poussette, et entrainent en rotation, dans la même direction, les arceaux avant 21 et arrière 22;
- la rotation de l'arceau avant 21 amorce, par le biais du système de transmission, le rapprochement des blocs de roues arrière 32, 33 vers la poutre centrale 30 et le bloc de roue avant 31 ;
- les montants 23, 24 sont pivotés vers les blocs de roues arrière 32, 33 jusqu'au pliage complet de la poussette ;
- en toute fin de pliage, la poignée 25 pivote automatiquement vers les blocs de roues arrière 32, 33, de manière à optimiser davantage le volume de la poussette dans sa position pliée

En position totalement pliée, comme illustré à la figure 3C, les montants 23, 24 sont totalement abaissées et sont alors repliés sur l'arceau arrière 22 qui est lui-même replié sur la poutre centrale 30.

Dans cette position, les montants 23, 24, les embases 211, 212 et l'arceau arrière 22 sont sensiblement parallèles à la poutre centrale 30.

Lors du dépliage, l'utilisateur relève les montants 23,24 vers le haut, en tirant sur la poignée 25.

### 6.5 Description détaillée du mécanisme de réglage et de pliage de la poignée

Comme indiqué précédemment, l'invention concerne un mécanisme de pliage de la poignée de poussette qui permet un pliage automatique de la poignée et une mémorisation du réglage de la position de la poignée.

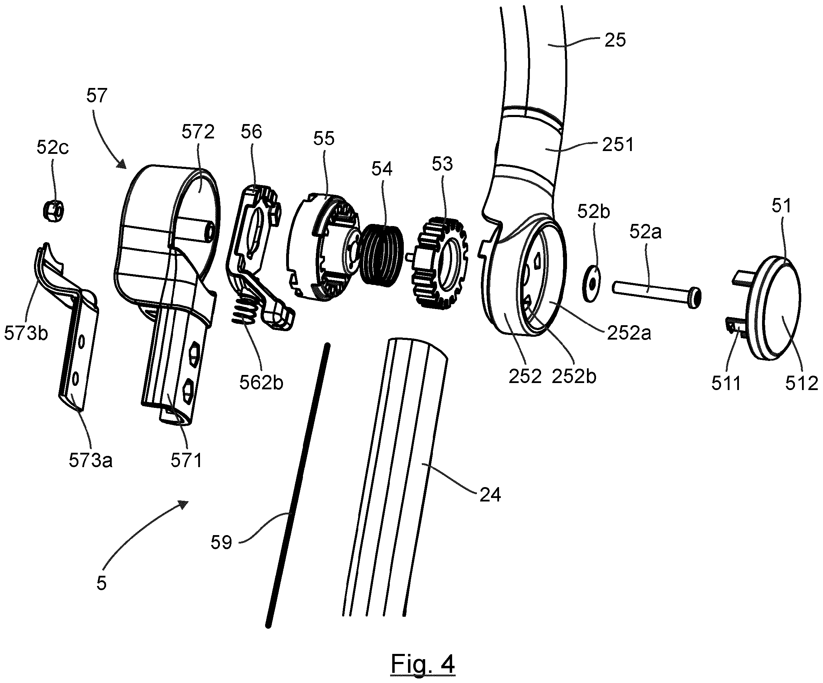

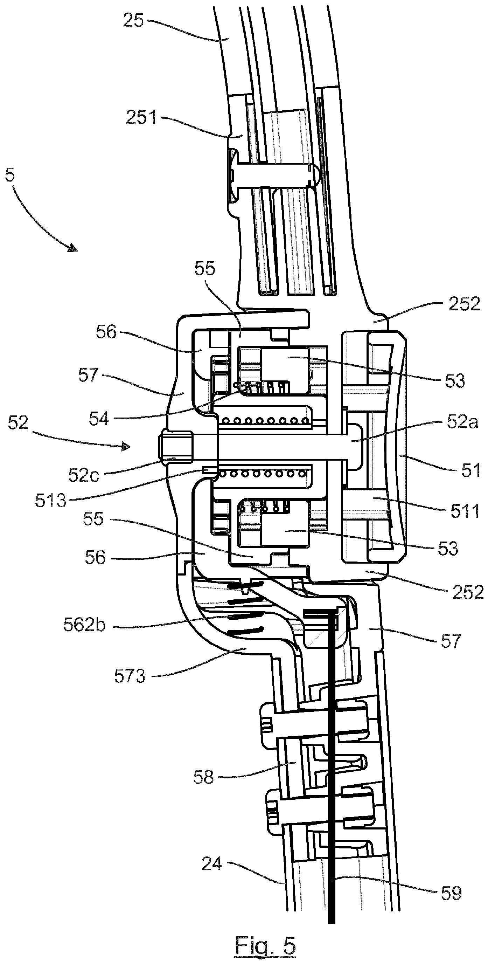

Un tel mécanisme de pliage 5, illustré sur les figures 4 et 5 notamment, se situe au niveau de l'articulation entre la poignée 25 et les montants 23, 24. Pour des raisons de clarté, seule la partie du mécanisme située entre le montant gauche 24 et la poignée 25 est détaillée. Bien évidemment, la partie du mécanisme située entre le montant droit 23 et la poignée 25 présente une structure et un fonctionnement identiques.

Ainsi, la poignée 25 comprend, à chacune de ses extrémités, une première partie de liaison 251 destinée à coopérer avec le mécanisme de pliage 5. La partie de liaison 251 est reliée, à une première extrémité, à la poignée 25 et présente, à sa deuxième extrémité, un élément de liaison 252, de forme sensiblement circulaire. L'élément de liaison 252 comprend un logement circulaire 252a apte à coopérer avec un bouton poussoir 51 destiné à être utilisé lors du réglage par l'utilisateur de la position de la poignée 25, c'est-à-dire lors du réglage de l'angle de la poignée 25 par rapport aux montants 23, 24.

Le montant gauche 24 comprend à son extrémité située proche du mécanisme de pliage 5 une deuxième partie de liaison 57. La partie de liaison 57 est solidaire du montant gauche 24 à une première extrémité 571 et présente, à sa deuxième extrémité, un élément de liaison 572, de forme sensiblement circulaire. L'élément de liaison 572 comprend un logement circulaire apte à recevoir, ou accueillir, les différents éléments du mécanisme de pliage qui seront détaillés dans la suite de la description.

La deuxième partie de liaison 57 comprend également un capot 573 dont une première portion 573a est destinée à coopérer avec la première extrémité 571 de la deuxième partie de liaison 57 et avec le montant gauche 24. Une deuxième portion 573b du capot 573 est destinée à coopérer avec l'élément de liaison 572.

Les première 251 et deuxième 57 parties de liaison sont solidarisées par le biais de moyens de solidarisation 52 comprenant une vis, ou tige filetée, 52a coopérant avec une rondelle 52b et un écrou 52c. Après assemblage, comme illustré à la figure 5, les moyens de solidarisation 52 permettent de maintenir les première 251 et deuxième 57 parties de liaison entre elles, formant ainsi une coque qui englobe et protège l'ensemble des éléments constituant le mécanisme de pliage.

Les moyens de solidarisation 52 permettent également, après assemblage, de relier, ou fixer, l'ensemble des autres éléments constituant le mécanismes de pliage 5.

Le mécanisme de pliage 5 comprend en outre une roue, ou pignon, de réglage 53, un premier ressort de rappel 54, une roue ou élément de verrouillage 55 et un élément d'engagement 56.

Plus précisément, le bouton poussoir 51 présente une pluralité de pattes (ou broches) 511 traversant/coopérant avec des lumières 252b de formes correspondantes situées dans le logement circulaire 252a de l'élément de liaison 252.

La surface d'appui ou d'actionnement 512 du bouton poussoir 51 est située sur un premier côté de l'élément de liaison 252. Les pattes 511, dont les extrémités traversent l'élément de liaison 252, sont donc, en partie, situées de part et d'autre de l'élément de liaison 252.

Les pattes 511 s'étendent sensiblement perpendiculairement à la surface d'appui 512 du bouton 51 et leurs extrémités sont en contact avec le pignon de réglage 53 situé sur un deuxième côté de l'élément de liaison 252. Plus précisément, le pignon de réglage 53 présente une première surface plane 531 sur laquelle les pattes 511 du bouton poussoir 51 sont en contact.

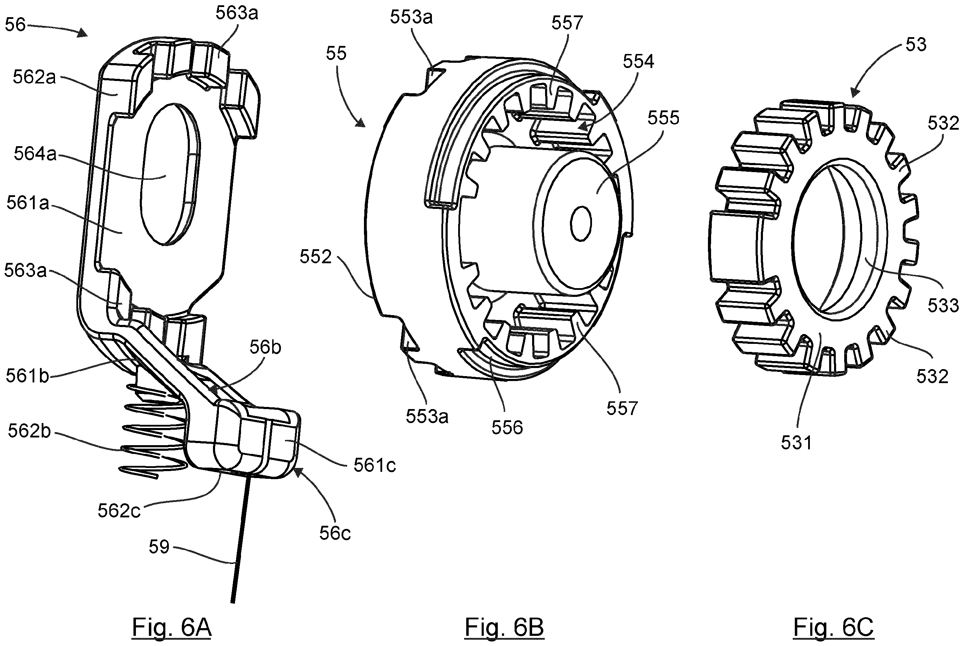

Le pignon de réglage 53, illustré plus en détail sur la vue de la figure 6C, se présente sous la forme d'une roue comprenant une lumière centrale circulaire 533 traversant le pignon de part et d'autre, permettant ainsi le passage de la vis 52a des moyens de solidarisation 52. Le pignon de réglage 53 comprend en outre, une pluralité de crans, ou cannelures, 532 situés sur l'ensemble de sa périphérie. Ces cannelures 532, disposées à intervalle constant présentent toutes les mêmes dimensions. Elles sont destinées à coopérer avec des rainures 557 de l'élément de verrouillage 55.

L'élément de verrouillage 55, illustré plus en détail sur la figure 6B, est de forme circulaire et présente une première surface, ou surface extérieure 551 (non visible) comprenant un rebord 552 sur sa périphérie. Le rebord 552, s'étend perpendiculairement à la surface extérieure 551 et présente des premières rainures 553 divisées en deux séries de quatre rainures 553a et 553b qui sont situées sur le rebord 552 de façon diamétralement opposée. Les rainures 553 de chaque série sont disposées à intervalle constant et sont de même dimension.

L'élément de verrouillage 55 comprend une seconde surface, ou surface intérieure 554 présentant un axe, ou arbre, 555, s'étendant perpendiculairement à la surface intérieure 554, et destiné à coopérer avec la lumière centrale 533 du pignon de réglage 53. L'arbre 555 présente une lumière permettant le passage de la vis 52a des moyens de solidarisation 52.

La seconde surface 554 comprend également un rebord 556 sur sa périphérie qui s'étend perpendiculairement à la seconde surface 554 et présente une pluralité de deuxièmes rainures 557. Les deuxièmes rainures 557, disposées à intervalle constant, sont destinées à coopérer avec les cannelures 532 du pignon de réglage 53. Ces rainures 557 sont donc de formes et de dimensions adaptées pour coopérer avec les cannelures 532.

Le pignon de réglage 53 est mobile entre une position verrouillée, dans laquelle les cannelures 532 coopèrent avec les rainures 557 de l'élément de verrouillage 55 de manière à bloquer la rotation du pignon de réglage 53, et une position de réglage, dans laquelle les cannelures 532 ne coopèrent plus avec les rainures 557, permettant ainsi la rotation du pignon de réglage 53 par rapport à l'élément de verrouillage 55.

Plus précisément, dans la position de réglage, le bouton poussoir est actionné et déplace le pignon de réglage 53 dans une rainure , ou gorge, (non visible) située à l'intérieur de l'élément de verrouillage 55, ce qui autorise la rotation du pignon de réglage 53 par rapport à l'élément de verrouillage 55.

Comme illustré sur la figure 5 notamment, un troisième ressort de rappel 54 (les premier et deuxième moyens de rappel sont décrits par la suite) est disposé entre le pignon de réglage 53 et l'élément de verrouillage 55. Lorsque le bouton poussoir 51 n'est plus actionné, le troisième ressort de rappel 54 permet le déplacement du bouton poussoir 51 vers la position de repos (bouton non actionné), et du pignon de réglage 53 de la position de réglage vers la position verrouillée.

Le pignon de réglage 53 et l'élément de verrouillage 55 forment ensemble les moyens de réglage et de mémorisation de la position de la poignée.

Le mécanisme de pliage 5 comprend en outre un élément d'engagement 56 qui est illustré plus en détail sur la figure 6A. L'élément d'engagement 56 comprend trois portions 56a, 56b et 56c. Les première et troisième portions 56a, 56c s'étendent sensiblement parallèlement et sont reliées l'une à l'autre par une deuxième portion, ou portion oblique, 56b.

La première portion 56a est de forme oblongue, c'est-à-dire quelle comprend deux côtés définis par deux segments parallèles de même longueur reliés l'un à l'autre par deux côtés définis par deux arcs de cercle, ou demi-cercles.

La première portion 56a comprend une première face 561a présentant, sur environ % de sa périphérie, un rebord 562a s'étendant perpendiculairement à la première surface 561a. Plus précisément, le rebord 562a s'étend sur les deux côtés en arc de cercle et sur un côté droit.

Le rebord 562a présente, sur chacun des côtés en arc de cercle, une série de trois rainures formant ainsi quatre crans 563a destinés à coopérer avec les rainures 553a et 553b définies sur l'élément de verrouillage 55.

La première portion 56a comprend également un lumière centrale 564a de forme oblongue traversant la première surface 561a. Cette lumière centrale 564a permet le passage des moyens de solidarisation 52 du mécanisme de pliage 5.

La portion oblique 56b de l'élément d'engagement 56 s'étend avec un angle compris entre 90° et 150° par rapport aux première et troisième portions 56a, 56c.

La portion oblique 56b présente sur sa surface inférieure 561b, un deuxième ressort de rappel 562b qui s'étend selon un axe parallèle au plan de la première surface 561a de la première portion 56a. Après assemblage du mécanisme de pliage 5, le deuxième ressort de rappel 562b est en contact/appui sur une surface interne sensiblement plane de la deuxième portion 573b du capot 573.

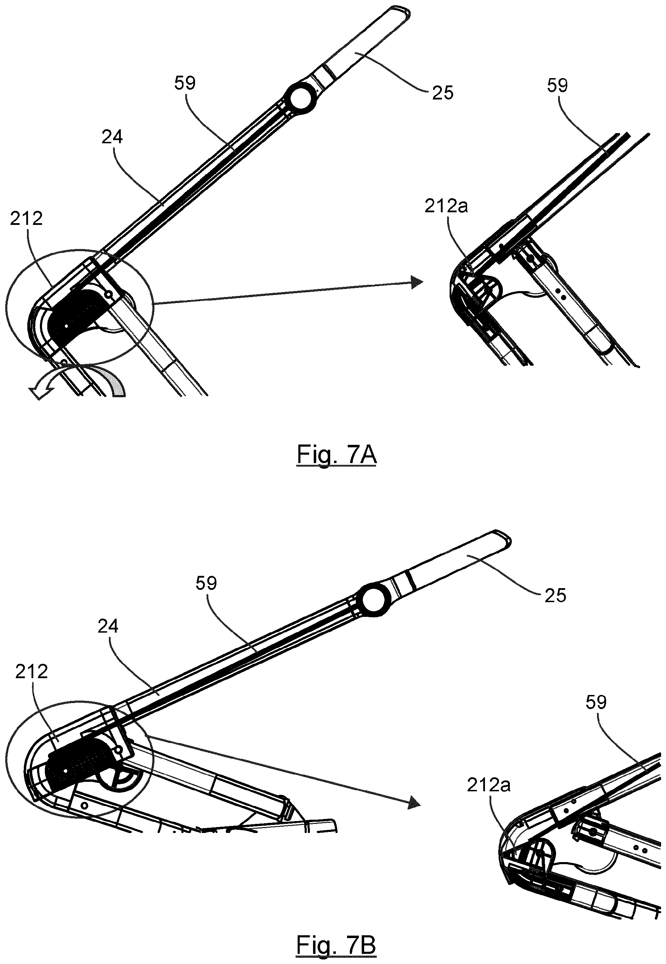

La troisième portion 56c comprend deux parties 561c et 562c entre lesquelles est disposé et maintenu un câble 59. Comme illustré sur les figures 5, 7A et 7B, le câble 59 est relié et tendu entre la troisième portion 56c du mécanisme de pliage et la liaison pivot 212a de l'embase 212.

L'élément d'engagement 56 et l'élément de verrouillage 55 forment ensemble les moyens de pliage automatique de la poignée.

De premiers moyens de rappel, par exemple sous la forme d'un ressort de torsion 513 monté concentriquement à l'axe de rotation, entre les pièces 55 et 57, sur l'axe peuvent être prévus, optionnellement, pour assister, voire assurer, une bonne rotation systématique du guidon 25 pendant le pliage.

### 6.6 Pliage automatique de la poignée de poussette

Comme indiqué précédemment, le pliage de la poignée de poussette s'effectue automatiquement, c'est-à-dire sans intervention manuelle de l'utilisateur. Pour ce faire, l'invention propose un mécanisme particulier de pliage de la poignée comprenant des moyens de pliage automatique permettant une libération contrôlée de la poignée et un pliage de cette dernière par gravité.

Comme décrit plus haut, lors du pliage de la poussette, les montants 23, 24 sont déplacés ou pivotés par l'utilisateur vers la partie inférieure 3, c'est-à-dire vers le bas. Le déplacement est obtenu par l'intermédiaire d'articulations situées dans les embases 211, 212.

Comme illustré sur les figures 7A et 7B, l'articulation de l'embase 212 est reliée au mécanisme de pliage 5 par un câble 59. Plus précisément, le câble 59 est relié d'une part à la liaison pivot 212a de l'embase 212 et d'autre part à la troisième portion 56c du mécanisme de pliage.

Ainsi, lors du pliage des montants 23 et 24, vers la partie inférieure 3, le câble 59 exerce une force F (visible sur la figure 7B) sur le mécanisme de pliage, et plus précisément sur l'élément d'engagement 56, en direction de l'embase 212. Cette force F provoque donc un déplacement de l'élément d'engagement 56 par rapport à l'élément de verrouillage 55.

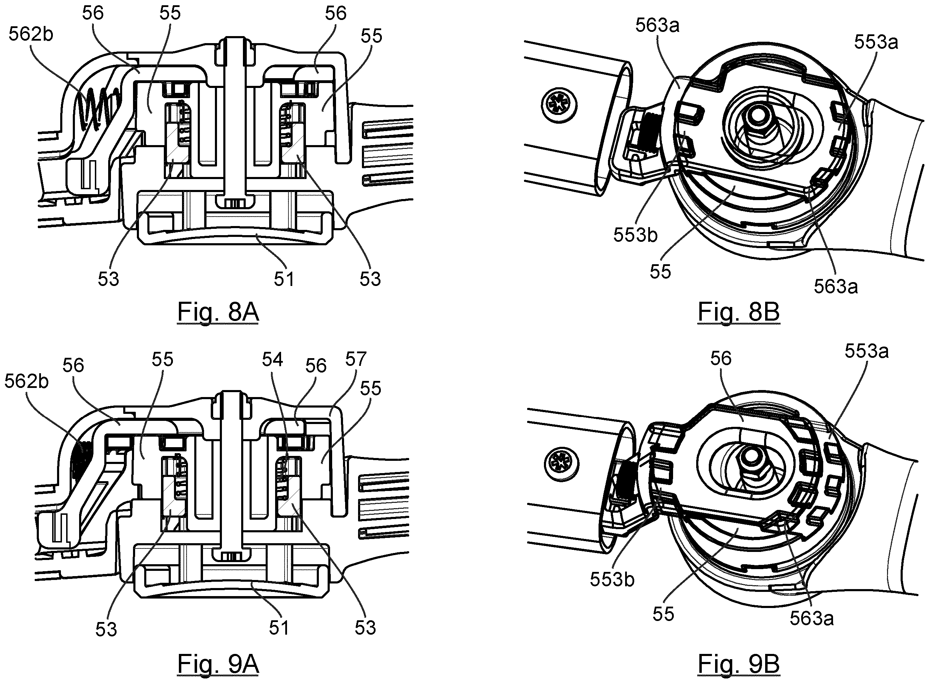

Les figures 8A et 8B illustrent les moyens de pliage automatique en position verrouillée. Dans cette position, l'élément d'engagement 56 coopère avec l'élément de verrouillage 55, c'est-à-dire que les crans 563a de l'élément d'engagement 56 coopèrent avec les rainures 553a et 553b de l'élément de verrouillage 55 de manière à supprimer ou empêcher les mouvements entre ces deux éléments. En d'autres termes, dans cette position, la rotation de l'élément de verrouillage 55 par rapport à l'élément d'engagement 56 est impossible.

Lors du pliage de la poussette, le câble 59 exerce une force qui déplace l'élément d'engagement 56 de la position verrouillée à la position déverrouillée (illustrée sur les figures 9A et 9B).

Dans la position déverrouillée des moyens de pliage automatique, l'élément d'engagement 56 est légèrement décalé par rapport à l'élément de verrouillage 55 de manière à ce que les crans 563a de l'élément d'engagement 56 ne coopèrent plus avec les rainures 553a 553b de l'élément de verrouillage 55.

Les crans 563a ne coopérant plus avec les rainures 553a et 553b, la rotation de l'élément de verrouillage 55 par rapport à l'élément d'engagement 56 est alors autorisée. Par conséquent, lorsque ces deux éléments ne sont plus verrouillés l'un à l'autre, la poignée 25 est alors libre et se plie automatique par gravité. Comme illustré sur la figure 3C, la poignée 25 se plie entièrement, jusqu'à être en contact avec les blocs de roues arrière 32, 33 de la poussette.

Lors du dépliage de la poussette, les montants 23, 24 sont pivotés dans le sens inverse, c'est-à-dire tirés vers le haut, et le câble 59 n'exerce donc plus aucune force sur l'élément d'engagement 56. Ainsi, le second ressort de rappel 562b permet, lorsque les crans 563a de l'élément d'engagement 56 et les rainures 553a, 553b de l'élément de verrouillage 55 sont alignés, de déplacer l'élément d'engagement 56 de la position déverrouillée (figures 9A et 9B) vers la position verrouillée (figures 8A et 8B).

### 6.7 Réglage de la position de la poignée de poussette

Le mécanisme de pliage 5 de la poignée 25 comprend en outre des moyens de réglage et de mémorisation de la position de la poignée 25. Ainsi, en position dépliée de la poussette, la poignée 25 peut être aisément réglée en hauteur par l'utilisateur.

Comme décrit ci-dessus, lors du pliage, la poignée 25 se plie entièrement et de manière automatique. Lors du dépliage, le mécanisme particulier permet à l'utilisateur de retrouver, de manière automatique (c'est-à-dire sans aucune manipulation particulière), la position de réglage de la poignée 25 avant le pliage de la poussette.

Pour ce faire, le mécanisme met en œuvre un pignon de réglage 53 qui est mobile entre une position verrouillée et une position de réglage. Dans la position de verrouillage, les cannelures 532 du pignon de réglage 53 coopèrent avec les rainures 557 de l'élément de verrouillage 55 empêchant ainsi la rotation du pignon de réglage 53 par rapport à l'élément de verrouillage 55. Le pignon de réglage 53 est maintenu dans cette position par le biais du premier ressort de rappel 54.

Le pignon de réglage 53 comprend une pluralité de cannelures 532 sur l'ensemble de sa périphérie de manière à offrir plusieurs positions de réglage à l'utilisateur.

Le réglage, par l'utilisateur, de la position de la poignée 25 est simple. En effet, il suffit à ce dernier d'actionner le bouton poussoir 51 et de faire pivoter la poignée 25 jusqu'à la position souhaitée.

Plus précisément, l'actionnement du bouton poussoir 51 provoque le déplacement du pignon 53 par rapport à l'élément de verrouillage 55. Suite à ce déplacement, les cannelures 532 du pignon de réglage 53 ne coopèrent plus avec les rainures 557 de l'élément de verrouillage 55. Les cannelures 532 se situent alors dans une rainure ou gorge interne (non visible) de l'élément de verrouillage 55. Dans cette position, dite de position de réglage, la poignée 25 peut être pivotée par l'utilisateur de façon à régler la hauteur/position de cette dernière.

Lorsque l'utilisateur a choisi sa position de réglage préférentielle de la poignée 25, il lui suffit de relâcher le bouton poussoir 51. Le premier ressort de rappel 54 déplace alors le pignon de réglage 53 dans sa position de verrouillage, dans laquelle les cannelures 533 du pignon 53 coopèrent avec les rainures 557 de l'élément de verrouillage 55.

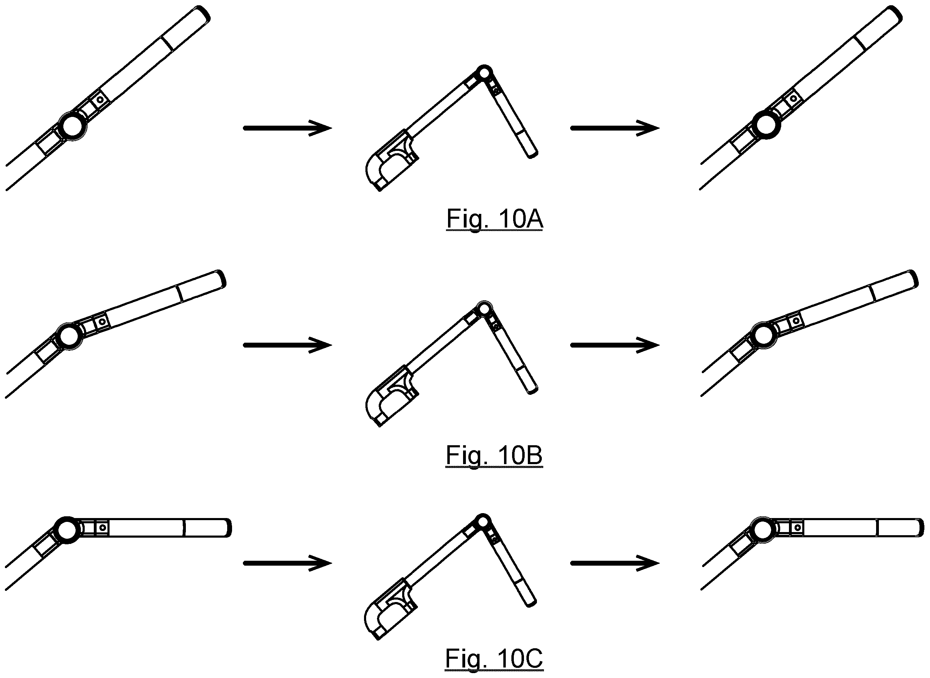

Les figures 10A à 10C illustrent chacune un exemple de pliage/dépliage de la poignée avec mémoire de la position initiale.

### 6.8 Mémorisation de la position de la poignée de poussette

Lors du réglage de la poignée 25, seul le pignon de réglage 53 se déplace par rapport à l'élément de verrouillage 55. En d'autres termes, l'élément d'engagement 56 n'est pas affecté par le pivotement de la poignée 25 et reste fixe par rapport à l'élément de verrouillage 55.

Lors du pliage de la poignée 25, l'élément de verrouillage 55 pivote par rapport à l'élément d'engagement 56. Ce pivotement de l'élément de verrouillage 55 n'a aucun effet sur le pignon de réglage 53 qui reste fixe par rapport à l'élément de verrouillage 55 et conserve sa position, et donc la position réglée de la poignée 25. Par conséquent, la position de la poignée 25 qui était réglée avant le pliage de la poussette n'est pas modifiée par le pliage de la poignée 25.

Ainsi, lors du dépliage de la poignée 25, l'élément de verrouillage 55 reprend sa position par rapport à l'élément d'engagement 56 (position verrouillée) et la poignée 25 retrouve automatiquement la position qui était la sienne avant le pliage.

En résumé, le mécanisme de pliage 5 de l'invention permet d'effectuer, de manière indépendante, le pliage et le réglage de la poignée. Le pliage de la poignée en fin de pliage du châssis n'influe pas sur le réglage de la position de la poignée lorsque le châssis est de nouveau déplié. Par conséquent, le réglage de la poignée en position d'utilisation n'est pas modifié lors du pliage de cette dernière. Une poussette équipée d'un tel mécanisme ne nécessite donc plus de régler la position de la poignée après chaque pliage/dépliage de la poussette.

Un tel mécanisme de pliage peut être mis en œuvre dans tout autre dispositif de puériculture présentant un problème technique proche ou similaire. On peut notamment citer les chaises hautes pour enfant qui sont pliables et dont l'inclinaison du dossier est réglable.

## Revendications

1. Châssis pliant (1) de poussette pour enfant, comprenant une partie inférieure (3) portant la ou les roues avant et les roues arrière et une partie supérieure (2) présentant des moyens de réception d'une assise et un guidon (25), le châssis (1) étant mobile entre au moins une position dépliée et au moins une position pliée, ledit guidon (25) étant mobile entre au moins une position de poussage et une position de repli,
comprenant des moyens de contrôle du pliage dudit guidon (25), assurant un passage dudit guidon (25) de ladite au moins une position de poussage vers ladite position de repli, **caractérisé en ce que** lesdits moyens de contrôle sont pilotés par le passage d'une desdites positions dépliées dudit châssis (1) vers une desdites positions pliées.

2. Châssis pliant (1) selon la revendication 1, **caractérisé en ce que** le passage dans ladite position de repli s'effectue sous l'effet de la gravité, lorsque lesdits moyens de contrôle libèrent un élément d'engagement (56) mobile entre une position verrouillée et au moins une position déverrouillée.

3. Châssis pliant (1) selon la revendication 1 ou 2, **caractérisé en ce que** les moyens de contrôle du pliage dudit guidon (25) comprennent un élément de verrouillage (55) coopérant avec un élément d'engagement (56) mobile entre une position verrouillée et au moins une position déverrouillée, le passage de la position verrouillée vers une desdites positions déverrouillée étant piloté par le passage d'une desdites positions dépliées dudit châssis (1) vers une desdites positions pliées.

4. Châssis pliant (1) selon la revendication 3, **caractérisé en ce que** le déverrouillage de l'élément d'engagement (56) permet le passage dudit guidon (25) de l'une desdites positions de poussage vers ladite position de repli par gravité.

5. Châssis pliant (1) selon l'une quelconque des revendications 1 à 4, **caractérisé en ce qu'**il comprend des premiers moyens de rappel assurant ou assistant le passage dudit guidon (25) de l'une desdites positions de poussage vers ladite position de repli.

6. Châssis pliant (1) selon l'une quelconque des revendications 3 à 5, le passage de l'élément d'engagement (56) de la position déverrouillée vers la position verrouillée est assuré via des deuxièmes moyens de rappel (562b).

7. Châssis pliant (1) selon l'une des revendications 1 à 6, **caractérisé en ce qu'**il comprend en outre des moyens de réglage de la position de poussage dudit guidon (25) aptes à déplacer ledit guidon (25) entre une première position desdites positions de poussage vers une deuxième position desdites positions de poussage.

8. Châssis pliant (1) selon la revendication 7, **caractérisé en ce que** ledit élément de verrouillage (55) coopère avec un élément de réglage (53) desdits moyens de réglage de la position de poussage dudit guidon (25), ledit élément de réglage (53) étant mobile entre une position permettant le réglage par l'utilisateur, dite position de réglage, et au moins une position maintenant la position réglée par l'utilisateur, dite position réglée.

9. Châssis pliant (1) selon la revendication 8, **caractérisé en ce que** le passage de l'élément de réglage (53) d'une desdites positions réglée vers la position de réglage est commandé par un bouton poussoir (51).

10. Châssis pliant (1) selon la revendication 8, **caractérisé en ce que** le passage de l'élément de réglage (53) de la position de réglage vers une desdites positions réglée est commandé par un premier ressort de rappel (54) lorsque ledit bouton poussoir (51) n'est plus actionné.

11. Châssis pliant (1) selon l'une des revendications 1 à 10, **caractérisé en ce que** la position réglée de l'élément de réglage (53) est maintenue lors du passage du guidon (25) entre une desdites positions de poussage vers la position de repli, et aussi lors du passage du guidon (25) entre ladite position de repli vers une desdites positions de poussage.

12. Poussette pour enfant à châssis pliant selon la revendication 1.

## Patentansprüche

1. Faltrahmen (1) für einen Kinderwagen, umfassend einen unteren Teil (3), der das Vorderrad oder die Vorderräder und die Hinterräder trägt, und einen oberen Teil (2), der Mittel zur Aufnahme eines Sitzes und eines Lenkers (25) aufweist, wobei der Rahmen (1) zwischen mindestens einer ausgeklappten Position und mindestens einer eingeklappten Position bewegbar ist, wobei der Lenker (25) zwischen mindestens einer Schiebeposition und einer Einklappposition bewegbar ist, umfassend Mittel zum Steuern des Einklappens des Lenkers (25), um einen Übergang des Lenkers (25) von der mindestens einen Schiebeposition in die Einklappposition zu gewährleisten, **dadurch gekennzeichnet, dass** die Mittel zum Steuern durch den Übergang von einer der ausgeklappten Positionen des Rahmens (1) in eine der eingeklappten Positionen gesteuert werden.

2. Faltrahmen (1) nach Anspruch 1, **dadurch gekennzeichnet, dass** der Übergang in die Einklappposition unter der Wirkung der Schwerkraft erfolgt, wenn die Mittel zum Steuern ein Eingriffselement (56) freigeben, das zwischen einer verriegelten Position und mindestens einer entriegelten Position bewegbar ist.

3. Faltrahmen (1) nach Anspruch 1 oder 2, **dadurch gekennzeichnet, dass** die Mittel zum Steuern des Einklappens des Lenkers (25) ein Verriegelungselement (55) umfassen, das mit einem Eingriffselement (56) zusammenwirkt, das zwischen einer verriegelten Position und mindestens einer entriegelten Position beweglich ist, wobei der Übergang von der verriegelten Position zu einer der entriegelten Positionen durch den Übergang von einer der ausgeklappten Positionen des Rahmens (1) zu einer der eingeklappten Positionen gesteuert wird.

4. Faltrahmen (1) nach Anspruch 3, **dadurch gekennzeichnet, dass** das Entriegeln des Eingriffselements (56) es dem Lenker (25) ermöglicht, von einer der Schiebepositionen mittels Schwerkraft in die Einklappposition überzugehen.

5. Faltrahmen (1) nach einem der Ansprüche 1 bis 4, **dadurch gekennzeichnet, dass** er erste Rückführmittel umfasst, die den Übergang des Lenkers (25) von einer der Druckpositionen in die Einklappposition sicherstellen oder unterstützen.

6. Faltrahmen (1) nach einem der Ansprüche 3 bis 5, wobei der Übergang des Eingriffselements (56) von der entriegelten Position in die verriegelte Position über zweite Rückführmittel (562b) gewährleistet ist.

7. Faltrahmen (1) nach einem der Ansprüche 1 bis 6, **dadurch gekennzeichnet, dass** er ferner Mittel zum Einstellen der Schiebeposition des Lenkers (25) umfasst, die dazu geeignet sind, den Lenker (25) zwischen einer ersten Position der Schiebepositionen und einer zweiten Position der Schiebepositionen zu bewegen.

8. Faltrahmen (1) nach Anspruch 7, **dadurch gekennzeichnet, dass** das Verriegelungselement (55) mit einem Einstellungselement (53) der Mittel zum Einstellen der Schiebeposition des Lenkers (25) zusammenwirkt, wobei das Einstellungselement (53) zwischen einer Position, die ein Einstellen durch den Benutzer ermöglicht, genannt Einstellposition, und mindestens einer Position, die die vom Benutzer eingestellte Position beibehält, genannt eingestellte Position, beweglich ist.

9. Faltrahmen (1) nach Anspruch 8, **dadurch gekennzeichnet, dass** der Übergang des Einstellungselements (53) von einer der eingestellten Positionen in die Einstellposition durch einen Druckknopf (51) gesteuert wird.

10. Faltrahmen (1) nach Anspruch 8, **dadurch gekennzeichnet, dass** der Übergang des Einstellungselements (53) von der Einstellposition zu einer der eingestellten Positionen durch eine erste Rückstellfeder (54) gesteuert wird, wenn der Druckknopf (51) nicht mehr betätigt wird.

11. Faltrahmen (1) nach einem der Ansprüche 1 bis 10, **dadurch gekennzeichnet, dass** die eingestellte Position des Einstellungselements (53) erhalten bleibt, wenn der Lenker (25) von einer der Schiebepositionen in die Einklappposition übergeht, und auch wenn der Lenker (25) von der Einklappposition in eine der Schiebepositionen übergeht.

12. Kinderwagen mit einem Faltrahmen nach Anspruch 1.

## Claims

1. Folding frame (1) for a child's pushchair, comprising a lower portion (3) carrying the front wheel or wheels and the rear wheels and an upper portion (2) that has means for receiving a seat portion and a handlebar (25), the frame (1) being mobile between at least one unfolded position and at least one folded position, said handlebar (25) being mobile between at least one pushing position and a folded position,
comprising means for controlling the folding of said handlebar (25), providing a passing of said handlebar (25) from said at least one pushing position to said folded position,
**characterised in that** said means for controlling are controlled by the passing from one of said unfolded positions of said frame (1) to one of said folded positions.

2. Folding frame (1) according to claim 1, **characterised in that** the passing into said folded position is carried out under the effect of gravity, when said means for controlling release an engaging element (56) that is mobile between a locked position and at least one unlocked position.

3. Folding frame (1) according to claim 1 or 2, **characterised in that** the means for controlling the folding of said handlebar (25) comprise a locking element (55) that cooperates with an engaging element (56) mobile between a locked position and at least one unlocked position, the passing from the locked position to one of said unlocked positions being driven by the passing from one of said unfolded positions of said frame (1) to one of said folded positions.

4. Folding frame (1) according to claim 3, **characterised in that** the unlocking of the engaging element (56) allows for the passing of said handlebar (25) from one of said pushing positions to said folded position via gravity.

5. Folding frame (1) according to one of claim 1 to 4, **characterised in that** it comprises first return means assisting or providing the passing of said handle (25) from one of said pushing positions to said folded position.

6. Folding frame (1) according to one of claims 3 to 5, **characterised in that** the passing of the engaging element (56) from the unlocked position to the locked position is provided via second return means (562b).

7. Folding frame (1) according to one of claims 1 to 6, **characterised in that** it further comprises means for adjusting the pushing position of said handlebar (25) that can displace said handlebar (25) between a first position of said pushing positions to a second position of said pushing positions.

8. Folding frame (1) according to claim 7, **characterised in that** said locking element (55) cooperates with an element for adjusting (53) said means for adjusting the pushing position of said handlebar (25), said element for adjusting (53) being mobile between a position that allows for adjustment by the user, referred to as the adjusting position, and at least one position that maintains the position adjusted by the user, referred to as adjusted position.

9. Folding frame (1) according to claim 8, **characterised in that** the passing of the adjusting element (53) from one of said adjusted positions to the adjusting position is controlled by a pushbutton (51).

10. Folding frame (1) according to claim 8, **characterised in that** the passing of the adjusting element (53) from the adjusting position to one of said adjusted positions is controlled by a first return spring (54) when said pushbutton (51) is no longer actuated.

11. Folding frame (1) according to one of claims 1 to 10, **characterised in that** the adjusted position of the adjusting element (53) is maintained during the passing of the handlebar (25) between one of said pushing positions to the folded position, and also during the passing of the handlebar (25) between said folded position to one of said pushing positions.

12. Child's pushchair comprising a folding frame (1) according to claim 1.
